# EUROPEAN PATENT APPLICATION

(11) **EP 2 801 859 A2**
(43) Date of publication of application: **12.11.2014**
(21) Application number: 13193748.4
(22) Date of filing: 21.11.2013
(51) Int. Cl.: G02F 1/1343

(54) **Active-matrix liquid crystal display which combines both IPS and FFS electrode configurations to generate a horizontal component of the electric field**

(30) Priority: 09.05.2013 CN 201310170051
(71) Applicant: Shanghai Avic Opto Electronics Co. Ltd, Minhang District 201108 Shanghai (CN); Tianma Micro-Electronics Co., Ltd., 518052 Shenzhen (CN)
(72) Inventor: Zhang, Weiwei, 201108 Shanghai (CN); Li, Jun, 201108 Shanghai (CN); Ye, Zhou, 201108 Shanghai (CN)
(74) Representative: Dantz, Jan Henning

(57) **Abstract**

An electrode configuration for enhancing the horizontal component of the electric field used to switch a pixel in an active-matrix LCD. The configuration integrates Fringe-Field Switching (FFS) and In-Plane Switching (IPS) technologies. As a result, the refresh rate is improved and power consumption can be reduced. In each pixel a first electrode (115) (common / pixel) and a second electrode (117) (pixel / common) are insulated from each other and located on different insulating layers. Furthermore, a third electrode (114) (common / pixel) and the first electrode, are also arranged on different insulating layers, but apply the same potential. Thus, electric fields are generated parallel to the substrate between the first and second electrodes and between the third and the second electrodes. Various geometrical variations are disclosed, in which the electodes can be planar or in the form of strips.

## Description

### Field of the Invention

The present invention relates to the field of display and particularly to a pixel structure, a TFT (Thin Film Transistor) array substrate, a liquid crystal display panel and a liquid crystal display device.

### Background of the Invention

A liquid crystal display panel is one of currently predominant display panels. The display modes generally include a Twisted Nematic (TN) mode, a Vertical Alignment (VA) mode, an In Plane Switching (IPS) mode, a Fringe Field Switching (FFS) mode, etc., wherein the IPS/FFS mode liquid crystal display panels have a wide range of applications due to their superior wide viewing angle and other characteristics.

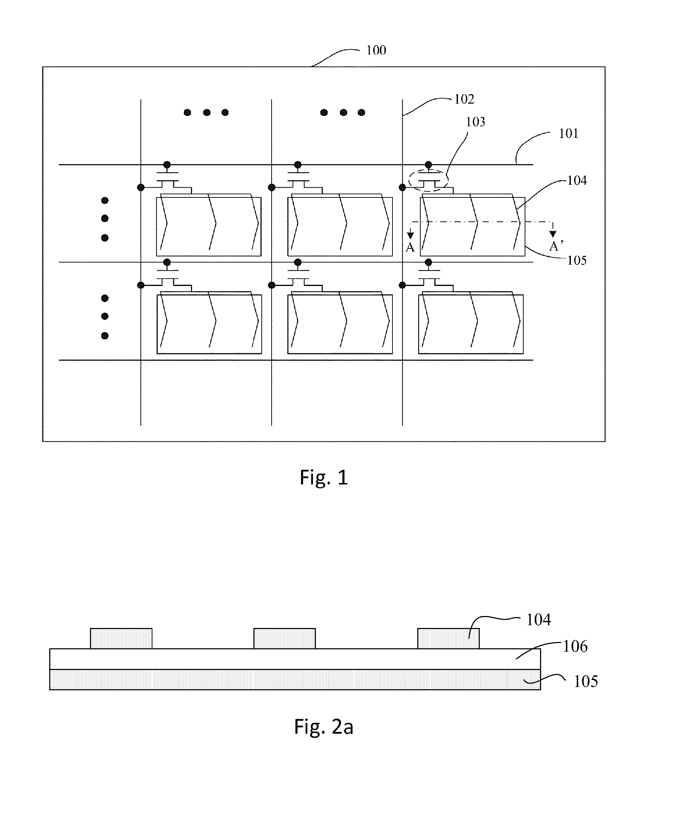

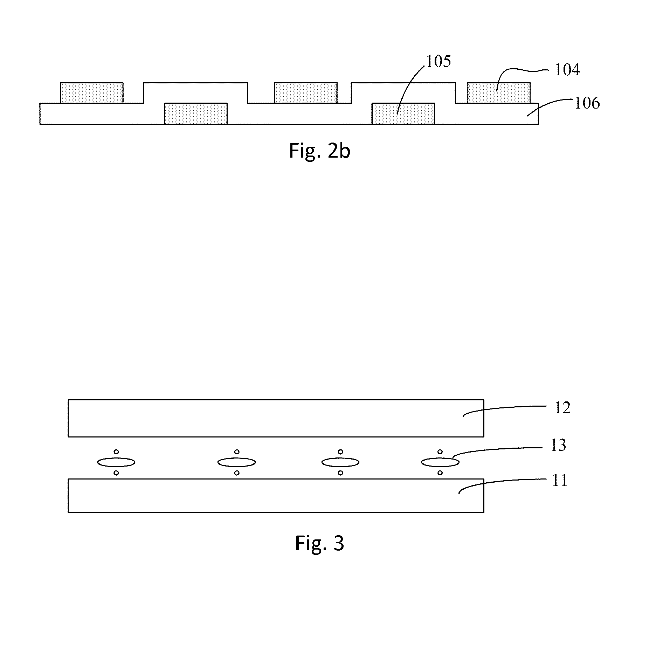

The existing FFS mode liquid crystal display panel typically includes a color filter substrate and a TFT array substrate disposed opposite to each other, and a liquid crystal layer disposed between them. Fig. 1 is a schematic structural top view of an FFS mode TFT array substrate in the prior art. As shown in Fig. 1, the FFS mode TFT array substrate in the prior art includes a substrate 100 and a pixel array disposed on the substrate 100. The pixel array includes a plurality of scan lines 101; a plurality of data lines 102, wherein the data lines 102 and the scan lines 101 intersect each other and are insulated from each other; TFTs 103 at the intersections of the scan lines 101 and the data lines 102; and a pixel structure disposed in a pixel area defined by adjacent scan lines 101 and adjacent data lines 102. Reference can be made to Fig. 1 and Fig. 2a for a specific structure of the pixel structure, where Fig. 2a is a sectional view along A-A' in Fig. 1. As shown in Fig. 1 and Fig. 2a, the pixel structure includes a plurality of strip-shaped pixel electrodes 104, a sheet-shaped common electrode 105 and an insulating layer 106 disposed between the pixel electrodes 104 and the common electrode 105 to insulate the pixel electrodes 104 from the common electrode 105; and an electric field parallel to the substrate 100 is generated between the pixel electrodes 104 and the common electrode 105. Of course, alternatively, the pixel electrode 104 can be sheet-shaped and located under the insulating layer 106, and the common electrodes 105 may be strip-shaped and located above the insulating layer 106; or both the pixel electrodes 104 and the common electrodes 105 may be strip-shaped and arranged alternately (as shown in Fig. 2b).

The lateral electric field Ex in the FFS mode pixel in the prior art is weak, therefore, in order to achieve the same display effect, the power consumption is increased and the refresh rate is decreased. The Chinese Patent Application No. CN201120313955.4 discloses a technology to enhance the lateral electric field by modifying the height of the pixel, etc., however the manufacturing process is complex and the cost is high.

### Summary of the Invention

Accordingly, in order to solve at least one of the technical problems of weak lateral electric field Ex in the IPS/FFS mode pixel, high power consumption, complex manufacturing process, high cost and low refresh rate, the present invention provides a pixel structure formed on a substrate, the pixel structure including: a first electrode and a second electrode insulated from each other and located on different layers; and a third electrode, the first electrode and the third electrode are being on different layers and applied a same potential, wherein electric fields parallel to the substrate are respectively generated between the first electrode and the second electrode and between the third electrode and the second electrode.

In a first preferred implementation, the pixel structure further includes a first insulating layer; the first electrode is sheet-shaped and located under the first insulating layer; the second electrode is strip-shaped and located above the first insulating layer; and the third electrode is strip-shaped and located above the first insulating layer.

Preferably, there are a plurality of the second electrodes and a plurality of the third electrodes, both of which are arranged alternately.

Preferably, the third electrode and the second electrode are located on the same layer; or wherein the third electrode and the second electrode are located on different layers and have a second insulating layer disposed between them.

In a second preferred implementation, the pixel structure further includes a first insulating layer; all the first electrode, the second electrode and the third electrode are strip-shaped; and the first electrode is located on one side of the first insulating layer, and both of the second electrode and the third electrode are located on the other side of the first insulating layer.

Preferably, there are a plurality of the first electrodes, a plurality of the second electrodes and a plurality of the third electrodes; the first electrodes and the third electrodes are disposed opposite to each other; and the first electrodes and the second electrodes are arranged alternately.

Preferably, the second electrode and the third electrode are located on a same layer; and wherein the second electrode and the third electrode are located above the first insulating layer, and the first electrode is located under the first insulating layer; or the second electrode and the third electrode are located under the first insulating layer, and the first electrode is located above the first insulating layer.

Preferably, the third electrode and the second electrode are located on different layers and have a second insulating layer disposed between them.

Preferably, the third electrode is located above the second insulating layer, the second electrode is located between the second insulating layer and the first insulating layer, and the first electrode is located under the first insulating layer; or the second electrode and the third electrode are located under the first insulating layer, and the first electrode is located above the first insulating layer; or the second electrode is located above the second insulating layer, the third electrode is located between the second insulating layer and the first insulating layer, and the first electrode is located under the first insulating layer.

In a third preferred implementation, the pixel structure further includes a first insulating layer and a second insulating layer; the first electrode, the second electrode and the third electrode are strip-shaped; and the first electrode is located between the first insulating layer and the second insulating layer, and the second electrode and the third electrode are located respectively on the outsides of the first insulating layer and the second insulating layer; and wherein the third electrode is located above the second insulating layer, the first electrode is located between the second insulating layer and the first insulating layer, and the second electrode is located under the first insulating layer; or the second electrode is located above the first insulating layer, the first electrode is located between the second insulating layer and the first insulating layer, and the third electrode is located under the second insulating layer.

In the foregoing embodiments, the strip-shape is a straight strip-shape or a "V" strip-shape or a zigzag strip-shape.

In the foregoing embodiments, the first electrode and the third electrode are pixel electrodes, and the second electrode is a common electrode; or the first electrode and the third electrode are common electrodes, and the second electrode is a pixel electrode.

An embodiment of the present invention further provides a TFT array substrate including a pixel array, wherein each pixel includes the pixel structure according to any one of the foregoing embodiments.

An embodiment of the present invention further provides a liquid crystal display panel including the foregoing TFT array substrate, a color filter substrate disposed opposite to the TFT array substrate, and a liquid crystal layer disposed between the TFT array substrate and the color filter substrate.

An embodiment of the present invention further provides a liquid crystal display device including the foregoing liquid crystal display panel.

As compared with the prior art, the pixel structure, the TFT array substrate, the liquid crystal display panel and the liquid crystal display device according to the embodiments of the present invention may achieve at least one of the advantages as following: enhance the lateral drive electric field of liquid crystals, improve a refresh rate, simplify the manufacturing process, reduce the manufacturing cost and reduce the power consumption.

### Brief Description of the Drawings

Fig. 1 is a schematic structural top view of an FFS mode TFT array substrate in the prior art;
Fig. 2a is a sectional view along A-A' in Fig. 1;
Fig. 2b is another sectional view along A-A' in Fig. 1;
Fig. 3 is a schematic structural sectional view of a liquid crystal display panel according to a first embodiment of the present invention;
Fig. 4 is a schematic structural top view of a TFT array substrate according to a second embodiment of the present invention;
Fig. 5 is a first sectional view along B-B' in Fig. 4;
Fig. 6 is a second sectional view along B-B' in Fig. 4;
Fig. 7 is a third sectional view along B-B' in Fig. 4;
Fig. 8 is a schematic structural top view of a pixel structure according to a fourth embodiment of the present invention;
Fig. 9a is a first sectional view along C-C' in Fig. 8;
Fig. 9b is a second sectional view along C-C' in Fig. 8;
Fig. 9c is a third sectional view along C-C' in Fig. 8;
Fig. 10 is a fourth sectional view along C-C' in Fig. 8;
Fig. 11 is a fifth sectional view along C-C' in Fig. 8;
Fig. 12 is a sixth sectional view along C-C' in Fig. 8;
Fig. 13 is a seventh sectional view along C-C' in Fig. 8;
Fig. 14 is a schematic comparative diagram between the distribution of a lateral electric field of the pixel structure illustrated in Fig. 5 and the distribution of a lateral electric field of the pixel structure illustrated in Fig. 2b; and
Fig. 15 is a schematic comparative diagram between the distribution of a lateral electric field of the pixel structures illustrated in Figs. 10 and 11 and the distribution of a lateral electric field of the pixel structure illustrated in Fig. 2a.

### Detailed Description of the Embodiments

A main idea of the present invention is to optimize the pixel structure on the base of the existing FFS pixel, to integrate the IPS and FFS structures, to enhance a lateral driving electric field of liquid crystals, to improve a refresh rate, simplify the manufacturing process, reduce the manufacturing cost and to reduce the power consumption.

### First Embodiment

A schematic structural sectional view of a liquid crystal display panel according to the first embodiment of the present invention is illustrated in Fig. 3. The liquid crystal display panel includes a TFT array substrate 11, a color filter substrate 12 disposed opposite to the TFT array substrate 11, and a liquid crystal layer 13 disposed between the TFT array substrate 11 and the color filter substrate 12.

The first embodiment of the present invention further provides a liquid crystal display device including the liquid crystal display panel illustrated in Fig. 3.

The TFT array substrate 11 in the first embodiment of the present invention may employ a TFT array substrate to be described in a second embodiment of the present invention below and the pixel structures included in the TFT array substrate 11 in the first embodiment of the present invention may employ pixel structures to be described in a third, a fourth, a fifth and a sixth embodiments of the present invention.

### Second Embodiment

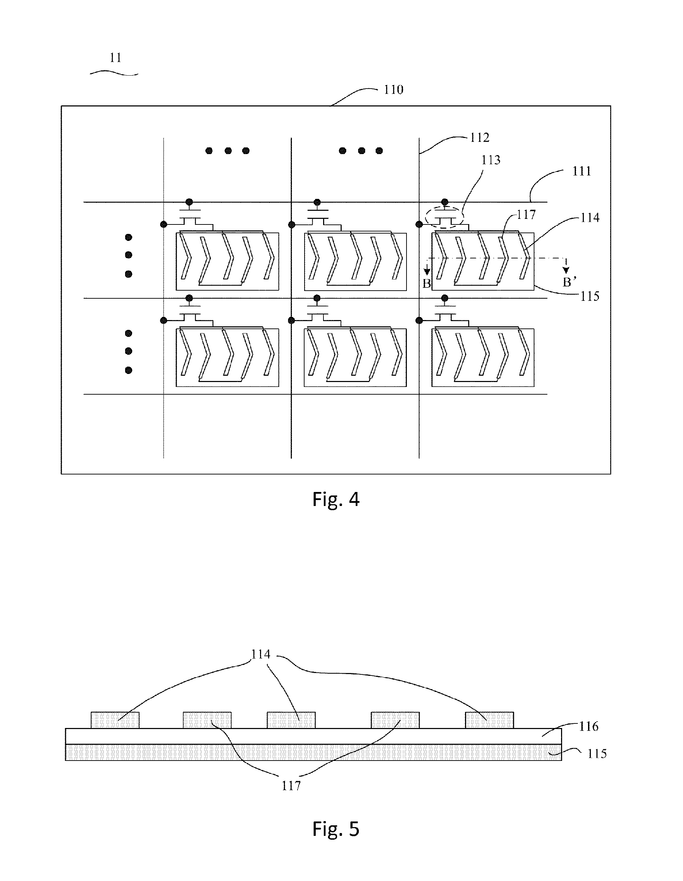

A schematic structural top view of a TFT array substrate according to the second embodiment of the present invention is illustrated in Fig. 4. The TFT array substrate 11 includes a substrate 110 and a pixel array on the substrate 110. The pixel array includes a plurality of scan lines 111, a plurality of data lines 112 intersecting with the scan lines 111 and insulated from the scan lines 111, TFTs 113 at the intersections of the scan lines 111 and the data lines 112, and a pixel structure disposed in a pixel area defined by adjacent scan lines 111 and adjacent data lines 112. The gate of the TFT 113 is electrically connected to the scan line 111, the source of the TFT 113 is electrically connected to the data line 112, and the drain of the TFT 113 is electrically connected to a pixel electrode in the pixel structure.

Reference can be made to Fig. 4 and Fig. 5 for a specific structure of the pixel structure, where Fig. 5 is a sectional view along B-B' in Fig. 4. As shown in Fig. 4 and Fig. 5, the pixel structure includes a sheet-shaped first electrode (i.e., a pixel electrode) 115 and strip-shaped second electrodes (i.e., common electrodes) 117 (typically more than one), both of which are insulated from each other and being on different layers; and a first insulating layer 116 located between the first electrode 115 and the second electrodes 117 and insulating the first electrode 115 from the second electrodes 117. The sheet-shaped first electrode 115 is located under the first insulating layer 116, and the strip-shaped second electrodes 117 are located above the first insulating layer 116. An electric field parallel to the substrate 110 is generated between the first electrode 115 and the second electrodes 117, so that liquid crystal molecules in a liquid crystal layer 13 are rotated in a plane parallel to the substrate 110. It shall be noted that in the present application, the concept of "parallel" will not be limited to being absolutely parallel, but shall be extended as appropriate to being substantially parallel. The electric field generated between the first electrode 115 and the second electrodes 117 is typically not absolutely parallel to the substrate 110, but includes a horizontal electric field component and a vertical electric field component.

The pixel structure further includes strip-shaped third electrodes (i.e., pixel electrodes) 114 (typically more than one), the first electrode 115 and the strip-shaped third electrodes (i.e., pixel electrodes) 114 are being on different layers and applied a same potential. The strip-shaped third electrodes (i.e., pixel electrodes) 114 are located above the first insulating layer 116. As shown in Fig. 4, the strip-shaped third electrodes 114 and the strip-shaped second electrodes 117 are located on the same layer, insulated from each other and arranged alternately. The third electrodes 114 are typically electrically connected to the drains of TFTs 113 through via holes (not illustrated) throughout the first insulating layer 116. An electric field parallel to the substrate 110 is generated between the third electrodes 114 and the second electrodes 117. That is, the electric fields parallel to the substrate 110 are respectively generated between the first electrode 115 and the second electrodes 117 and between the third electrodes 114 and the second electrodes 117. The second electrodes 117 and the third electrodes 114 are located above the first electrode 115.

Moreover, in an appropriate variant of this embodiment, both the first electrode 115 and the third electrodes 114 may be common electrodes, and the second electrodes 117 may be pixel electrodes. The first electrode 115 and the third electrodes 114 may be exchanged in location.

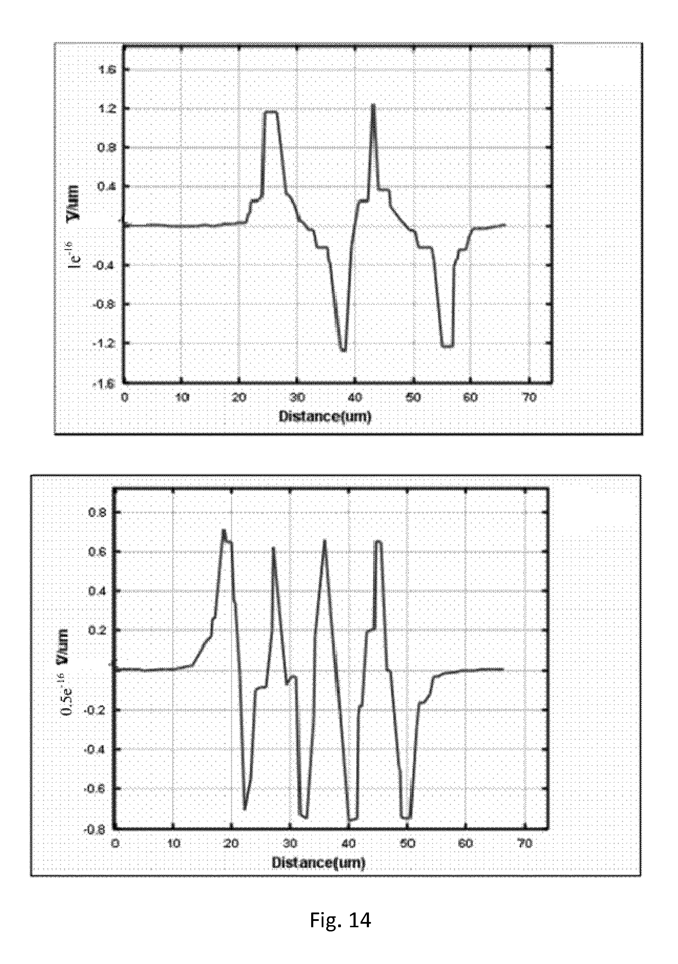

A schematic comparative diagram between the distribution of a lateral electric field of the pixel structure illustrated in Fig. 5 according to the second embodiment and the distribution of a lateral electric field of the pixel structure illustrated in Fig. 2b in the prior art is illustrated in Fig. 14. In Fig. 14, the upper diagram is the distribution of a lateral electric field of the pixel structure illustrated in Fig. 5 according to the second embodiment, and the lower diagram is the distribution of a lateral electric field of the pixel structure illustrated in Fig. 2b in the prior art. As shown in comparison of the upper and lower diagrams in Fig. 14, the peak of the lateral electric field of the pixel structure according to the second embodiment is about 1.2 e⁻¹⁶, and the peak of the lateral electric field of the pixel structure in the prior art is about 0.7*0.5 e⁻¹⁶=0.35 e⁻¹⁶, the peak of this embodiment is about 34 times as great as that in the prior art, thus the lateral electric field of the pixel structure according to the second embodiment has been greatly enhanced compared to the lateral electric field of the pixel structure in the prior art.

### Third Embodiment

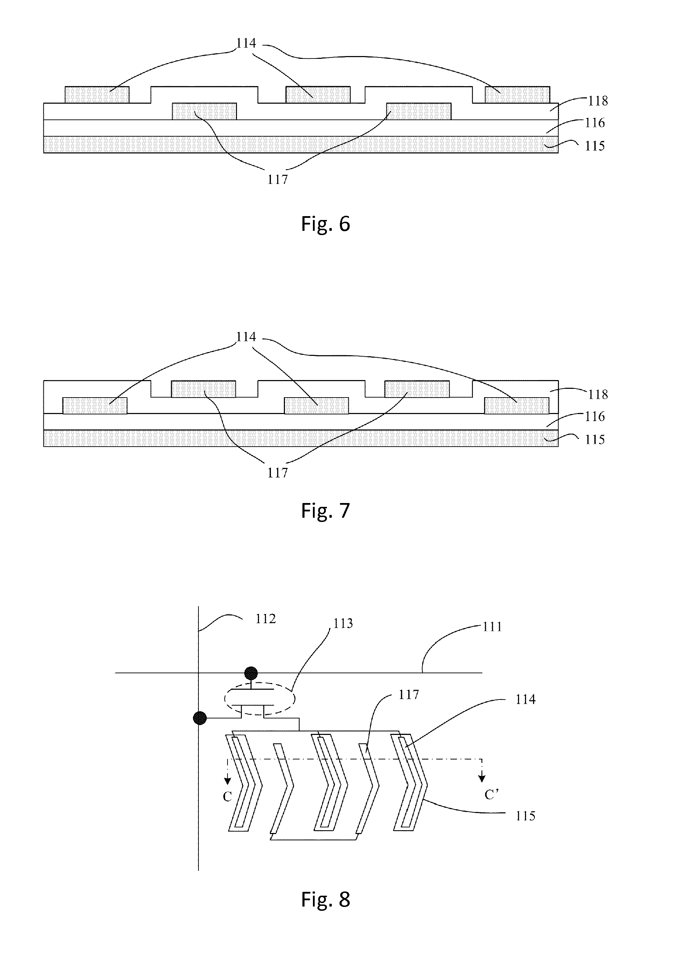

A top view of a pixel structure according to the third embodiment of the present invention is illustrated in Fig. 4, and a sectional view thereof along B-B' can be further illustrated in Fig. 6. As shown in Fig. 4 and Fig. 6, the pixel structure includes a sheet-shaped first electrode (i.e., a pixel electrode) 115 and strip-shaped second electrodes (i.e., common electrodes) 117 (typically more than one) insulated from the first electrode 115 and located on a different layer from the first electrode 115; and a first insulating layer 116 located between the first electrode 115 and the second electrodes 117 for insulating the first electrode 115 from the second electrodes 117. The sheet-shaped first electrode 115 is located under the first insulating layer 116, and the strip-shaped second electrodes 117 are located above the first insulating layer 116. An electric field parallel to the substrate 110 is generated between the first electrode 115 and the second electrodes 117, so that liquid crystal molecules in a liquid crystal layer 13 are rotated in a plane parallel to the substrate 110. It shall be noted that in the present application, the concept of "parallel" will not be limited to being absolutely parallel, but shall be extended as appropriate to being substantially parallel. The electric field generated between the first electrode 115 and the second electrodes 117 is typically not absolutely parallel to the substrate 110, but includes a horizontal electric field component and a vertical electric field component.

The pixel structure further includes strip-shaped third electrodes (i.e., pixel electrodes) 114 (typically more than one), the first electrode 115 and the strip-shaped third electrodes (i.e., pixel electrodes) 114 are being on different layers and applied a same potential. The strip-shaped third electrodes (i.e., pixel electrodes) 114 are located above the first insulating layer 116. In the Fig. 6, a second insulating layer 118 is disposed between the strip-shaped third electrodes 114 and the strip-shaped second electrodes 117 which are located on different layers and arranged alternately. The third electrodes 114 are typically electrically connected to the drains of TFTs 113 through via holes (not illustrated) throughout the first insulating layer 116 and the second insulating layer 118. An electric field parallel to the substrate 110 is generated between the third electrodes 114 and the second electrodes 117. That is, the electric fields parallel to the substrate 110 are respectively generated between the first electrode 115 and the second electrodes 117 and between the third electrodes 114 and the second electrodes 117. The second electrodes 117 and the third electrodes 114 are located above the first electrode 115.

In Fig. 6, an example is illustrated, in which the third electrodes 114 are located above the second insulating layer 118, the second electrodes 117 are located between the second insulating layer 118 and the first insulating layer 116, and the first electrode 115 is located under the first insulating layer 116, that is, the third electrodes 114 and the first electrode 115 are located respectively on two sides of the second electrodes 117, but alternatively, the second electrodes 117 are located above the second insulating layer 118, the third electrodes 114 may be located between the second insulating layer 118 and the first insulating layer 116, and the first electrode 115 may be located under the first insulating layer 116, that is, both the third electrodes 114 and the first electrode 115 may be located under the second electrodes 117 (as illustrated in Fig. 7).

Moreover, in an appropriate variant of this embodiment, both the first electrode 115 and the third electrodes 114 may be common electrodes, and the second electrodes 117 may be pixel electrodes. The first electrode 115 and the third electrodes 114 may be exchanged in location.

### Fourth Embodiment

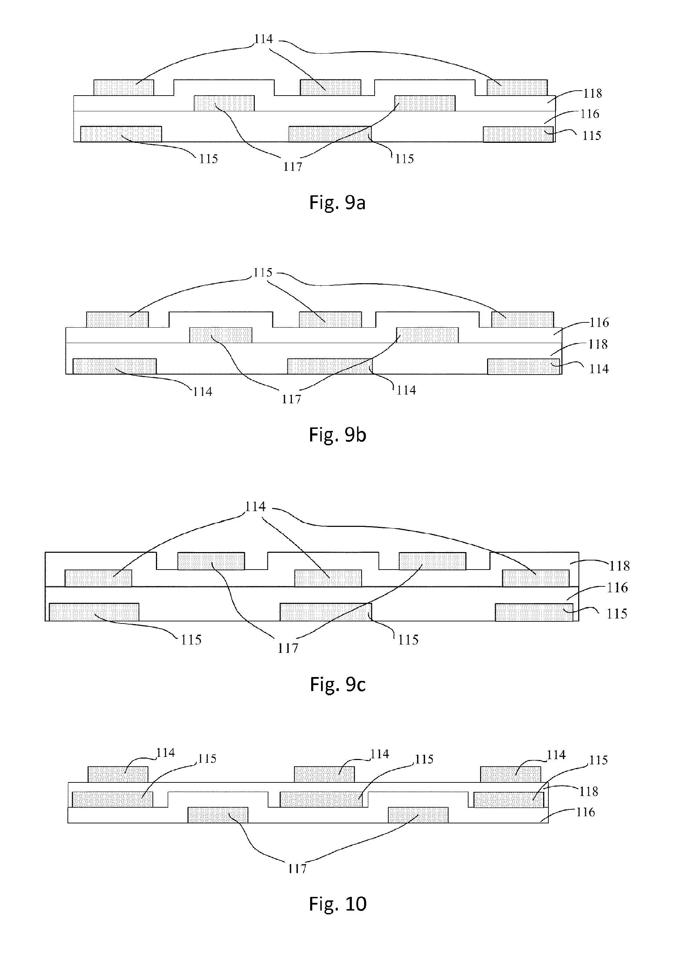

A schematic structural top view of a pixel structure according to the fourth embodiment of the present invention is illustrated in Fig. 8, and a schematic structural sectional view thereof along C-C' is illustrated in Fig. 9a, Fig. 9b and Fig. 9c.

As shown in Fig. 8 and Fig. 9a, the pixel structure includes strip-shaped first electrodes (i.e., pixel electrodes) 115 (typically more than one) and strip-shaped second electrodes (i.e., common electrodes) 117 (typically more than one) insulated from the first electrodes 115 and located on a different layer from the first electrodes 115; and the first electrodes 115 are located on one side (i.e., underside) of a first insulating layer 116, and the second electrodes 117 are located on the other side (i.e., upper side) of the first insulating layer 116; and an electric field parallel to the substrate 110 is generated between the first electrodes 115 and the second electrodes 117, so that liquid crystal molecules in a liquid crystal layer 13 are rotated in a plane parallel to the substrate 110. It shall be noted that in the present application, the concept of "parallel" will not be limited to being absolutely parallel, but shall be extended as appropriate to being substantially parallel. The electric field generated between the first electrodes 115 and the second electrodes 117 is typically not absolutely parallel to the substrate 110, but includes a horizontal electric field component and a vertical electric field component.

The pixel structure further includes strip-shaped third electrodes (i.e., pixel electrodes) 114 (typically more than one), the first electrode 115 and the strip-shaped third electrodes (i.e., pixel electrodes) 114 are being on different layers and applied a same potential. In the Fig. 9a, the strip-shaped third electrodes 114 are located on the one side (i.e., upper side) of the first insulating layer 116, said one side of the first insulating layer 116 is opposite to the first electrodes 115; a second insulating layer 118 is disposed between the strip-shaped third electrodes 114 and the strip-shaped second electrodes 117 which are located on different layers and arranged alternately; and the strip-shaped first electrodes 115 and the strip-shaped second electrodes 117 are arranged alternately. The strip-shaped first electrodes 115 and the strip-shaped third electrodes 114 are preferably disposed opposite to each other. The third electrodes 114 are located above the second insulating layer 118, the second electrodes 117 are located between the second insulating layer 118 and the first insulating layer 116, and the first electrodes 115 are located under the first insulating layer 116.

The third electrodes 114 are typically electrically connected to the drains of TFTs 113 through via holes (not illustrated) throughout the first insulating layer 116 and the second insulating layer 118. An electric field parallel to the substrate 110 is generated between the third electrodes 114 and the second electrodes 117. That is, the electric fields parallel to the substrate 110 are respectively generated between the first electrodes 115 and the second electrodes 117 and between the third electrodes 114 and the second electrodes 117.

Moreover, in an appropriate variant of this embodiment, both the first electrodes 115 and the third electrodes 114 may be common electrodes, and the second electrodes 117 may be pixel electrodes. The first electrodes 115 and the third electrodes 114 may be exchanged in location. In the fourth embodiment, an example is illustrated in which the second electrodes 117 and the third electrodes 114 are located above the first insulating layer 116, and the first electrodes 115 are located under the first insulating layer 116, but alternatively, the second electrodes 117 and the third electrodes 114 may be located under the first insulating layer 116, and the first electrodes 115 may be located above the first insulating layer 116 (as illustrated in Fig. 9b), or in other embodiments, the second electrodes 117 may be located above the second insulating layer 118, the third electrodes 114 may be located between the second insulating layer 118 and the first insulating layer 116, and the first electrodes 115 may be located under the first insulating layer 116 (as illustrated in Fig. 9c).

### Fifth Embodiment

A top view of a pixel structure according to the fifth embodiment of the present invention is illustrated in Fig. 8, and a sectional view thereof along C-C' is illustrated in Fig. 10. As shown in Fig. 8 and Fig. 10, the pixel structure includes strip-shaped first electrodes (i.e., pixel electrodes) 115 (typically more than one) and strip-shaped second electrodes (i.e., common electrodes) 117 (typically more than one) insulated from the first electrodes 115 and located on a different layer from the first electrodes 115; a first insulating layer 116 and a second insulating layer 118; and strip-shaped third electrodes (i.e., pixel electrodes) 114 (typically more than one), the first electrode 115 and the strip-shaped third electrodes (i.e., pixel electrodes) 114 are being on different layers and applied a same potential. The first electrodes 115 are located between the first insulating layer 116 and the second insulating layer 118, and the second electrodes 117 and the third electrodes 114 are located respectively on the outsides of the first insulating layer 116 and the second insulating layer 118.

An electric field parallel to the substrate 110 is generated between the first electrodes 115 and the second electrodes 117, so that liquid crystal molecules in a liquid crystal layer 13 are rotated in a plane parallel to the substrate 110. It shall be noted that in the present application, the concept of "parallel" will not be limited to being absolutely parallel, but shall be extended as appropriate to being substantially parallel. The electric field generated between the first electrodes 115 and the second electrodes 117 is typically not absolutely parallel to the substrate 110, but includes a horizontal electric field component and a vertical electric field component.

In the Fig. 10, the second insulating layer 118 is disposed between the strip-shaped third electrodes 114 and the strip-shaped first electrodes 115 which are located on different layers and arranged alternately, and preferably the third electrodes 114 and the first electrodes 115 are disposed opposite to each other. That is, the third electrodes 114 are located above the second insulating layer 118, the first electrodes 115 are located between the second insulating layer 118 and the first insulating layer 116, and the second electrodes 117 are located under the first insulating layer 116. The third electrodes 114 are typically electrically connected to the drains of TFTs 113 through via holes (not illustrated) throughout the first insulating layer 116 and the second insulating layer 118. An electric field parallel to the substrate 110 is generated between the third electrodes 114 and the second electrodes 117. That is, the electric fields parallel to the substrate 110 are generated between the first electrodes 115 and the second electrodes 117 and between the third electrodes 114 and the second electrodes 117, respectively. The first electrodes 115 and the third electrodes 114 are located above the second electrodes 117.

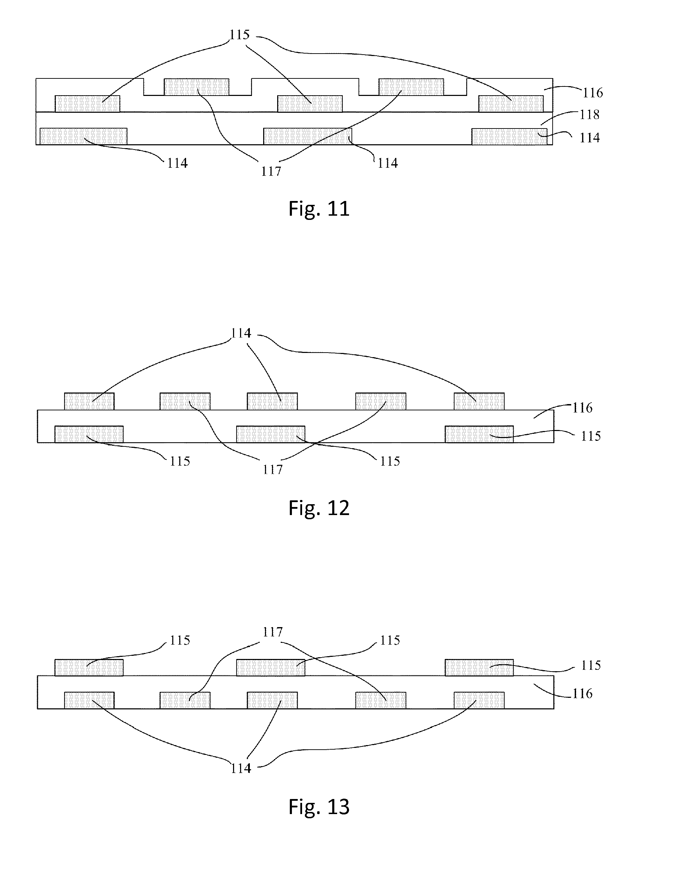

In Fig. 10, an example is illustrated in which the third electrodes 114 are located above the second insulating layer 118, the first electrodes 115 are located between the second insulating layer 118 and the first insulating layer 116, and the second electrodes 117 are located under the first insulating layer 116, but alternatively, the second electrodes 117 may be located above the first insulating layer 116, the first electrodes 115 may be located between the second insulating layer 118 and the first insulating layer 116, and the third electrodes 114 may be located under the second insulating layer 118 (as illustrated in Fig. 11).

Moreover, in an appropriate variant of this embodiment, both the first electrodes 115 and the third electrodes 114 may be common electrodes, and the second electrodes 117 may be pixel electrodes. The first electrodes 115 and the third electrodes 114 may be exchanged in location.

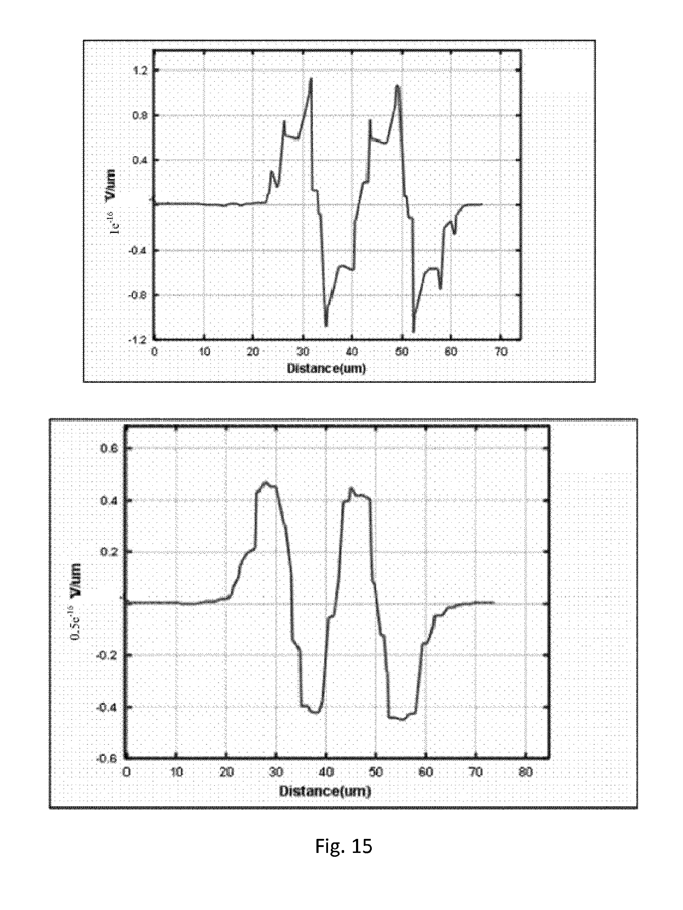

A schematic comparative diagram between the distribution of the lateral electric field of the pixel structure illustrated in Fig. 10 and Fig. 11 according to the fifth embodiment and the distribution of the lateral electric field of the pixel structure illustrated in Fig. 2a in the prior art is illustrated in Fig. 15. In Fig. 15, the upper diagram is the distribution of the lateral electric field of the pixel structure illustrated in Fig. 10 and Fig. 11 according to the fifth embodiment, and the lower diagram is the distribution of the lateral electric field of the pixel structure illustrated in Fig. 2ain the prior art. As shown in comparison of the upper and lower diagrams in Fig. 15, the peak of the lateral electric field of the pixel structure according to the fifth embodiment is about 1.0 e⁻¹⁶, and the peak of the lateral electric field of the pixel structure in the prior art is about 0.5*0.5 e⁻¹⁶=0.25 e⁻¹⁶, the peak of this embodiment is about 4 times as great as that in the prior art, thus the lateral electric field of the pixel structure according to the fifth embodiment has been greatly enhanced compared to the lateral electric field of the pixel structure in the prior art.

### Sixth Embodiment

A top view of a pixel structure according to the sixth embodiment of the present invention is illustrated in Fig. 8, and a sectional view thereof along C-C' can be further illustrated in Fig. 12. As shown in Fig. 8 and Fig. 12, the pixel structure includes strip-shaped first electrodes (i.e., pixel electrodes) 115 (typically more than one) and strip-shaped second electrodes (i.e., common electrodes) 117 (typically more than one) insulated from the first electrodes 115 and located on a different layer from the first electrodes 115; and a first insulating layer 116 located between the first electrodes 115 and the second electrodes 117 and insulating the first electrodes 115 from the second electrodes 117. An electric field parallel to the substrate 110 is generated between the first electrodes 115 and the second electrodes 117, so that liquid crystal molecules in a liquid crystal layer 13 are rotated in a plane parallel to the substrate 110. It shall be noted that in the present application, the concept of "parallel" will not be limited to being absolutely parallel, but shall be extended as appropriate to being substantially parallel. The electric field generated between the first electrodes 115 and the second electrodes 117 is typically not absolutely parallel to the substrate 110, but includes a horizontal electric field component and a vertical electric field component.

The pixel structure further includes strip-shaped third electrodes (i.e., pixel electrodes) 114 (typically more than one), the first electrode 115 and the strip-shaped third electrodes (i.e., pixel electrodes) 114 are being on different layers and applied a same potential. In the Fig. 12, the strip-shaped third electrodes 114 and the strip-shaped first electrodes 115 are located on different layers and preferably disposed opposite to each other; the strip-shaped third electrodes 114 and the strip-shaped second electrodes 117 are located on a same layer; the strip-shaped first electrodes 115 and the strip-shaped second electrodes 117 are arranged alternately; and the strip-shaped third electrodes 114 and the strip-shaped second electrodes 117 are arranged alternately. The third electrodes 114 are typically electrically connected to the drains of the TFTs 113 through via holes (not illustrated) throughout the first insulating layer 116. An electric field parallel to the substrate 110 is generated between the third electrodes 114 and the second electrodes 117. That is, the electric fields parallel to the substrate 110 are generated between the first electrodes 115 and the second electrodes 117 and between the third electrodes 114 and the second electrodes 117, respectively.

In Fig. 12, an example is illustrated in which the third electrodes 114 and the second electrodes 117 are located above the first insulating layer 116, and the first electrodes 115 are located under the first insulating layer 116, but alternatively, the third electrodes 114 and the second electrodes 117 may be located under the first insulating layer 116, and the first electrodes 115 may be located above the first insulating layer 116 (as illustrated in Fig. 13).

Moreover, in an appropriate variant of this embodiment, the first electrodes 115 and the third electrodes 114 may be common electrodes, and the second electrodes 117 may be pixel electrodes. The first electrodes 115 and the third electrodes 114 may be exchanged in location.

In the embodiments mentioned above, the strip-shape may be a straight strip-shape, a "V" strip-shape, a zigzag strip-shape, etc.

Evidently those skilled in the art can make various modifications and variations to the present invention without departing from the scope of the present invention. Thus the present invention is also intended to encompass these modifications and variations thereto so long as the modifications and variations come into the scope of the claims appended to the present invention and their equivalents.

## Claims

1. A pixel structure formed on a substrate, the pixel structure comprising:
a first electrode (115) and a second electrode (117) insulated from each other and located on different layers; and
a third electrode (114), the first electrode (115) and the third electrode (114) being on different layers and applied a same potential;
wherein electric fields parallel to the substrate are respectively generated between the first electrode (115) and the second electrode (117) and between the third electrode (114) and the second electrode (117).

2. The pixel structure according to claim 1, wherein the pixel structure further comprises a first insulating layer (116); the first electrode (115) is sheet-shaped and located under the first insulating layer (116); the second electrode (117) is strip-shaped and located above the first insulating layer (116); and the third electrode (114) is strip-shaped and located above the first insulating layer (116).

3. The pixel structure according to claim 2, wherein there are a plurality of the second electrodes (117) and a plurality of the third electrodes (114), both of which are arranged alternately.

4. The pixel structure according to claim 2, wherein the third electrode (114) and the second electrode (117) are located on a same layer; or wherein the third electrode (114) and the second electrode (117) are located on different layers and have a second insulating layer (118) disposed between them.

5. The pixel structure according to claim 1, wherein the pixel structure further comprises a first insulating layer (116); all of the first electrode (115), the second electrode (117) and the third electrode (114) are strip-shaped; and the first electrode (115) is located on one side of the first insulating layer (116), and both of the second electrode (117) and the third electrode (114) are located on the other side of the first insulating layer (116).

6. The pixel structure according to claim 5, wherein there are a plurality of the first electrodes (115), a plurality of the second electrodes (117) and a plurality of the third electrodes (114); the first electrodes (115) and the third electrodes (114) are disposed opposite to each other; and the first electrodes (115) and the second electrodes (117) are arranged alternately.

7. The pixel structure according to claim 5, wherein the second electrode (117) and the third electrode (114) are located on a same layer;
and wherein the second electrode (117) and the third electrode (114) are located above the first insulating layer (116), and the first electrode (115) is located under the first insulating layer (116); or the second electrode (117) and the third electrode (114) are located under the first insulating layer (116), and the first electrode (115) is located above the first insulating layer (116).

8. The pixel structure according to claim 5, wherein the third electrode (114) and the second electrode (117) are located on different layers and have a second insulating layer (118) disposed between them.

9. The pixel structure according to claim 4 or 8, wherein the third electrode (114) is located above the second insulating layer (118), the second electrode (117) is located between the second insulating layer (118) and the first insulating layer (116), and the first electrode (115) is located under the first insulating layer (116); or
the second electrode (117) and the third electrode (114) are located under the first insulating layer (116), and the first electrode (115) is located above the first insulating layer (116); or
the second electrode (117) is located above the second insulating layer (118), the third electrode (114) is located between the second insulating layer (118) and the first insulating layer (116), and the first electrode (115) is located under the first insulating layer (116).

10. The pixel structure according to claim 1, wherein the pixel structure further comprises a first insulating layer (116) and a second insulating layer (118); the first electrode (115), the second electrode (117) and the third electrode (114) are strip-shaped; and the first electrode (115) is located between the first insulating layer (116) and the second insulating layer (118), and the second electrode (117) and the third electrode (114) are located respectively on the outsides of the first insulating layer (116) and the second insulating layer (118);
and wherein the third electrode (114) is located above the second insulating layer (118), the first electrode (115) is located between the second insulating layer (118) and the first insulating layer (116), and the second electrode (117) is located under the first insulating layer (116); or the second electrode (117) is located above the first insulating layer (116), the first electrode (115) is located between the second insulating layer (118) and the first insulating layer (116), and the third electrode (114) is located under the second insulating layer (118).

11. The pixel structure according to any one of claims 2-10, wherein the strip-shape is a straight strip-shape or a "V" strip-shape or a zigzag strip-shape.

12. The pixel structure according to any one of claims 1-10, wherein the first electrode (115) and the third electrode (114) are pixel electrodes, and the second electrode (117) is a common electrode; or
wherein the first electrode (115) and the third electrode (114) are common electrodes, and the second electrode (117) is a pixel electrode.

13. A TFT (Thin Film Transistor) array substrate, comprising a pixel array, wherein each pixel comprises the pixel structure according to any one of claims 1-12.

14. A liquid crystal display panel, comprising: the TFT (Thin Film Transistor) array substrate according to claim 13, a color filter substrate disposed opposite to the TFT array substrate, and a liquid crystal layer disposed between the TFT array substrate and the color filter substrate.

15. A liquid crystal display device, comprising the liquid crystal display panel according to claim 14.
